(19) Europäisches Patentamt / European Patent Office / Office européen des brevets

(11) **EP 4 383 433 A1**

(12) **EUROPÄISCHE PATENTANMELDUNG**

(43) Veröffentlichungstag:
**12.06.2024  Patentblatt 2024/24**

(21) Anmeldenummer: **22212135.2**

(22) Anmeldetag: **08.12.2022**

(51) Internationale Patentklassifikation (IPC):
*H01M 50/358* (2021.01)     *H01M 50/503* (2021.01)
*H01M 10/65* (2014.01)       *H01M 50/105* (2021.01)
*H01M 50/342* (2021.01)     *H01M 50/593* (2021.01)
*H01M 50/375* (2021.01)     *H01M 50/392* (2021.01)
*H01M 50/207* (2021.01)     *H01M 50/218* (2021.01)

(52) Gemeinsame Patentklassifikation (CPC):
**H01M 50/358; H01M 10/65; H01M 50/105;
H01M 50/207; H01M 50/218; H01M 50/342;
H01M 50/375; H01M 50/392; H01M 50/503;
H01M 50/593**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**

(71) Anmelder: **Hilti Aktiengesellschaft
9494 Schaan (LI)**

(72) Erfinder:
• **Musolino, Vincenzo
9470 Buchs (CH)**

• **Marin Goncalves, Jonathan Jesus
9472 Grabs (CH)**
• **Simon, Sebastian
86807 Buchloe Lindenberg (DE)**

(74) Vertreter: **Hilti Aktiengesellschaft
Corporate Intellectual Property
Feldkircherstrasse 100
Postfach 333
9494 Schaan (LI)**

(54) **VOR THERMISCHEM DURCHGEHEN GESCHÜTZTE BATTERIEANORDNUNG**

(57)    Die Erfindung betrifft eine wiederaufladbare Batterieanordnung (14) für eine mobile Werkzeugmaschine (10) mit wenigstens einer Einzelzelle (26), mit einer Haltestruktur (22) mit wenigstens einem Aufnahmeraum (24), wobei die Einzelzelle (26) in den Aufnahmeraum (24) aufgenommen ist. Sie ist vor einem thermischen Durchgehen dadurch geschützt, dass der Aufnahmeraum (24) mit einem Entlastungsraum (30) der Batterieanordnung derart verbunden ist, dass ein aus der Einzelzelle (26) austretendes und / oder von der Einzelzelle (26) gebildetes Gas vom Aufnahmeraum (24) in den Entlastungsraum (26) fließen kann.

**Fig. 3**

## Beschreibung

Die Erfindung geht aus von einer wiederaufladbaren Batterieanordnung für eine mobile Werkzeugmaschine mit wenigstens einer Einzelzelle, mit einer Haltestruktur mit wenigstens einem Aufnahmeraum, wobei die Einzelzelle in den Aufnahmeraum aufgenommen ist. Die Batterieanordnung kann mehrere Einzelzellen umfassen, um ein Vielfaches der Energiekapazität einer Einzelzelle bereitstellen zu können.

Wünschenswert ist es, wenn mobile Werkzeugmaschine, beispielsweise akkubetriebene Handwerkzeugmaschinen, hohe Arbeitsleistungen bieten. Solche hohen Arbeitsleistungen bedingen jedoch hohe Entladeströme während des Betriebs der mobilen Werkzeugmaschine.

Bei mobilen Werkzeugmaschinen kann es dabei teilweise zu Entladeströmen kommen, die ein Vielfaches der Entladeströme betragen, wie sie sonst bei anderen Akkumulator-gestützten Anwendungen, beispielsweise im Bereich der Zwischenspeicherung von Solarstrom oder im Bereich der e-Mobilität bekannt ist.

Auch ist es wünschenswert, eine entladene Batterieanordnung rasch wieder aufladen zu können, um mit ihm die mobile Werkzeugmaschine weiter betreiben zu können. Dies erfordert jedoch hohe Ladeströme.

Gerade bei hohen Lade- oder Entladeströmen einer solchen Batterieanordnung, insbesondere wenn die Einzelzelle Lithium-basiert ist, kann jedoch ein hohes Risiko eines thermischen Durchgehens bestehen. Ein solches thermisches Durchgehen kann die Batterieanordnung beschädigen. Auch kann es zu Folgeschäden in einer Umgebung der Batterieanordnung, beispielsweise aufgrund von Explosionen, kommen. Bei mobilen Werkzeugmaschinen kann dies insbesondere zu Personenschäden bei beispielsweise einem Benutzer der mobilen Werkzeugmaschine kommen.

Eine Batterieanordnung für eine mobile Werkzeugmaschine sollte möglichst kleinbauend sein, also ein geringes Gesamtvolumen aufweisen, um eine möglichst komfortable Nutzung der mobilen Werkzeugmaschine zu ermöglichen.

Aufgabe der vorliegenden Erfindung ist es daher, eine Batterieanordnung für eine mobile Werkzeugmaschine sowie eine mobile Werkzeugmaschine anzubieten, die einen sicheren Betrieb der mobilen Werkzeugmaschine, selbst bei hohen Lade- beziehungsweise Entladeströmen der Batterieanordnung, ermöglicht.

Gelöst wird die Aufgabe durch eine wiederaufladbare Batterieanordnung mit wenigstens einer Einzelzelle, mit einer Haltestruktur mit wenigstens einem Aufnahmeraum, wobei die Einzelzelle in den Aufnahmeraum aufgenommen ist, wobei der Aufnahmeraum mit einem Entlastungsraum der Batterieanordnung derart verbunden ist, dass ein aus der Einzelzelle austretendes und / oder von der Einzelzelle gebildetes Gas vom Aufnahmeraum in den Entlastungsraum fließen kann.

Dem liegt der Gedanke zugrunde, dass Einzelzellen häufig soweit möglich, bereits einen gewissen konstruktiven Schutz vor einem thermischen Durchgehen bieten. Kommt es jedoch dennoch zu einem thermischen Durchgehen der Einzelzelle, kann zumindest die übrige Batterieanordnung, beispielsweise die Haltestruktur und / oder andere Einzelzellen sowie ggf. eine Umgebung der Batterieanordnung, vor möglichen direkten und indirekten Folgen geschützt werden. Dazu bietet der Entlastungsraum ein Entlastungsvolumen, in das aus der Einzelzelle austretendes Gas aufgenommen werden kann. Dadurch kann das im Entlastungsraum gesammelte Gas von der Einzelzelle zumindest weitgehend thermisch getrennt werden.

Selbst bei weiterem Erhitzen der Einzelzelle kann somit das Risiko einer Explosion des gesammelten Gases reduziert werden.

Denkbar ist, dass mehrere Aufnahmeräume in denselben Entlastungsraum münden.

Weist die Batterieanordnung mehrere Einzelzellen auf und ist jeder der Einzelzellen ein eigener Entlastungsraum zugeordnet, so können austretende Gase individuell in separaten Aufnahmeräumen gesammelt werden. Die Einzelvolumina der gesammelten Gase bleiben gering, sodass eine dennoch auftretende etwaige Explosion weniger gravierende Folgen hätte als im Falle, dass sich das gesamte ausgetretene Gas in einem einzigen Sammelraum oder zusammenhängend in der Umgebung befände und insgesamt explodieren würde. Somit können Schäden der Umgebung, insbesondere Personenschäden, selbst dann vermieden oder zumindest erheblich reduziert werden, wenn die Einzelzelle thermisch durchgeht.

Der Entlastungsraum kann anfangs luftgefüllt sein. Er kann gegenüber einem Umgebungsdruck außerhalb der Batterieanordnung einen, insbesondere geringfügigen, Unterdruck aufweisen. Er kann auch, insbesondere nach Eintritt von Gas aus dem Aufnahmeraum, relativ zum Umgebungsdruck einen, insbesondere geringen Überdruck aufweisen. Eine Wandung des Entlastungsraums kann elastisch sein. Insbesondere kann der Entlastungsraum ähnlich einem Ballon ein druckabhängiges, veränderliches Volumen aufweisen. Somit kann der Druck im Entlastungsraum gering bleiben und dennoch der Entlastungsraum einen ausreichenden Anteil des ausgetretenen Gases, insbesondere das gesamte ausgetretene Gas, aufnehmen.

Der Entlastungsraum kann zylinderförmig, quaderförmig oder kugelförmig sein. Er kann als Teil des Aufnahmeraums ausgebildet sein. Mit anderen Worten kann der Aufnahmeraum derart dimensioniert sein, dass die in ihm aufgenommene Einzelzelle nicht alle Wände des Aufnahmeraums gleichzeitig kontaktiert.

Am Aufnahmeraum kann ein Ventil ausgebildet sein. Das Ventil kann ein Überdruckventil sein.

Denkbar ist auch, dass das Ventil temperaturgesteuert ist. Am Aufnahmeraum kann somit ein temperaturgesteuertes Ventil ausgebildet sein. Das Ventil kann eingerichtet sein, ab einer Grenztemperatur TG zu öffnen. Das Ventil kann zu einer Umgebung der Batterieanordnung hin öffnen.

Durch das, insbesondere temperaturgesteuerte, Ventil können somit heiße Gase, beispielsweise kurz vor oder zu Beginn eines thermischen Durchgehens, aus der Batterieanordnung entweichen. Andere Einzelzellen können somit geschützt werden. Zudem kann dadurch Wärmeenergie durch Konvektion von der betroffenen Einzelzelle weggebracht werden. Ein drohendes oder beginnendes thermisches Durchgehen können somit unter Umständen verhindert oder unterbrochen werden. Das temperaturgesteuerte Ventil kann insbesondere eingerichtet sein, bei einer Grenztemperatur TG zu öffnen, bei der noch kein zur Öffnung eines Überdruckventils üblicherweise erforderlicher Überdruck herrscht.

Die Grenztemperatur TG kann wenigstens 70°C betragen. Sie kann höchstens 120°C, insbesondere höchstens 100°C betragen. Die Grenztemperatur TG kann insbesondere derart gewählt sein, dass bei einem normalen Betrieb, insbesondere bei regulär verlaufenden Entladevorgängen oder Ladevorgängen das temperaturgesteuerte Ventil geschlossen bleibt, aber bei Auftreten von heißen Gasen, die ein thermisches Durchgehen indizieren könnten, öffnet. Die Grenztemperatur TG kann auch derart niedrig gewählt sein, dass durch das temperaturgesteuerte Ventil entweichende heiße Gase keinen Schaden oder allenfalls einen auf ein akzeptables Maß begrenzten Schaden an der Umgebung ausüben können.

Eine konstruktiv einfache Variante des temperaturgesteuerten Ventil kann ein Bimetall umfassen.

Eine ebenfalls konstruktiv einfache Ausgestaltung ergibt sich auch, wenn das temperaturgesteuerte Ventil als Schwachstelle in einer Wand des Aufnahmeraums, insbesondere an einer Stirnfläche der Einzelzelle gegenüberliegenden Wand, ausgebildet ist und / oder eine solche umfasst. Es kann beispielsweise aus einem, insbesondere ab der Grenztemperatur TG, schmelzbaren oder sublimierbaren Material bestehen.

Der Entlastungsraum kann zusammen mit dem Aufnahmeraum einen Kanalraum bilden. Jeder Kanalraum kann ein Innenvolumen aufweisen, das mindestens der Summe der Volumina der in ihm aufzunehmenden oder aufgenommenen N Einzelzellen, wobei N die Anzahl der aufzunehmenden oder aufgenommenen Einzelzellen ist, entspricht.

Jeder Kanalraum, also an jeder Kombination wenigstens eines Entlastungsraums mit wenigstens einem Aufnahmeraum, kann mindestens ein temperatur- und / oder druckgesteuertes Ventil umfassen.

Um eine hinreichend geringe Wärmeleitung durch Wände des Kanalraums sicherzustellen und somit die Ausbreitung über mehrere Kanalräume hinweg zumindest zu verlangsamen, kann eine Mindestdicke d einer Wand des Kanalraums als Funktion der gesamten Zellkapazität C, gemessen in Ah, und der Anzahl N der aufzunehmenden oder aufgenommenen Einzelzellen im selben Kanalraum wie folgt gewählt sein:

$$d \geq C \cdot K1 \cdot N^{K2},$$

wobei K1 ein Dickenkoeffizient ist. Für typische Materialien wie beispielsweise Kunststoff kann der Dickenkoeffizient im Bereich von 0,02 bis 0,1 mm / Ah, insbesondere 0,05 mm / Ah, betragen.

K2 ist ein Einflussfaktor, um das Zusammenwirken mehrerer Einzelzellen zu berücksichtigen. K2 kann beispielsweise wenigstens 1 betragen. K2 kann höchstens 3 betragen. Beispielsweise kann K2 2 betragen.

Die Batterieanordnung kann, insbesondere angrenzend an den Aufnahmeraum, ein temperaturaktivierbares Material aufweisen. Beispielsweise kann eine Wand des Aufnahmeraums aus dem temperaturaktivierbaren Material ausgebildet sein und / oder ein solches Material aufweisen. Unter einem temperaturaktivierbaren Material kann ein Material verstanden werden, dass ab einer bestimmten Temperatur, insbesondere unterhalb von 200° C, bevorzugt unterhalb von 100°C, eine, insbesondere dauerhafte, physikalische und / oder chemische Umwandlung vollzieht.

Beispielweise kann das aktivierbare Material ein intumeszierendes und / oder endothermes Material sein. Das Material kann ab einer Reaktionsmindesttemperatur TR eine endotherme Veränderung, beispielsweise einen Phasenübergang und / oder eine endotherme Reaktion, durchführen. Das Material kann ein brandschützendes und / oder brandhemmendes Material sein.

Die Batterieanordnung kann wenigstens zwei benachbarte Einzelzellen aufweisen. Vorzugsweise kann sich zwischen den beiden Einzelzellen das aktivierbare Material befinden. Das aktivierbare Material kann somit eine Sperrfläche zwischen den beiden Einzelzellen bilden. Auch hierdurch kann ein Übergreifen eines unerwünschten Zustandes, beispielsweise eines thermischen Durchgehens, von einer Einzelzelle zu einer anderen, verhindert werden.

Die Batterieanordnung kann wenigstens zwei benachbarte Einzelzellen aufweisen, wobei jede Einzelzelle wenigstens einen Polanschluss aufweist. Wenigstens zwei der Polanschlüsse der beiden benachbarten Einzelzellen können miteinander durch eine Anschlussplatte verbunden sein. Die Anschlussplatte kann an wenigstens einer der Stirnseiten der Einzelzellen eine Öffnung aufweisen. Die Öffnung kann auch ein Ventil sein. Beispielweise ist denkbar, dass die Öffnung das temperaturgesteuerte Ventil umfasst. So ergibt sich eine einfache Möglichkeit, eine Ausbreitung eines aus einem der Polanschlüsse entweichenden Gases, beispielsweise im Falle eines thermischen Durchgehens, zu der benachbarten Einzelzelle zu blockieren. Zusätzlich kann das Gas durch die Öffnung, und damit beispielsweise in einer zur Anschlussplatte senkrechten Richtung, evakuiert werden.

Dazu kann die Anschlussplatte eine senkrecht oder zumindest im Wesentlichen senkrecht zur Verbindungsrichtung der beiden Polanschlüsse verlaufende Sperrfläche aufweisen. Die Sperrfläche kann nach Art einer Lasche geformt sein.

Bei einer Klasse von Ausführungsbeispielen kann die wenigstens eine Einzelzelle als Pouchzelle ausgebildet sein. Sie kann quaderförmig sein. Sie kann faltbar sein. Sie kann Polanschlüsse auf wenigstens einer, insbesondere ein und derselben, Seite, beispielsweise einer Oberseite oder einer Unterseite der Pouchzelle, aufweisen.

Eine Pouchzelle kann im Vergleich mit einer zylinderförmigen Einzelzelle eine größere spezifische Oberfläche, also eine auf ihr Volumen bezogene Oberfläche, aufweisen, sodass sich Wärme besser aus dem Inneren der Einzelzelle nach außen abführen lässt, um so bereits auf Ebene der Einzelzelle einem thermischen Durchgehen vorzubeugen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**

Fig. 1    eine mobile Werkzeugmaschine mit einer Batterieanordnung;

Fig. 2    eine Explosionsdarstellung einer Batterieanordnung;

Fig. 3    eine schematische Darstellung einer weiteren Batterieanordnung mit Entlastungsräumen;

Fig. 4    eine schematische Darstellung einer weiteren Batterieanordnung mit einem temperaturgesteuerten Ventil;

Fig. 5    eine schematische Darstellung einer weiteren Batterieanordnung mit einem aktivierbaren Material;

Fig. 6    eine schematische Darstellung einer weiteren Batterieanordnung mit einem aktivierbaren Material;

Fig. 7    eine schematische Darstellung einer weiteren Batterieanordnung mit einer Anschlussplatte; und

Fig. 8    eine Detailansicht der Batterieanordnung gemäß Fig. 7.

In der nachfolgenden Beschreibung der Figuren werden zur Erleichterung des Verständnisses der Erfindung für gleiche oder sich funktional entsprechende Elemente jeweils die gleichen Bezugszeichen verwendet.

Obwohl die zu beschreibende Batterieanordnung mehrere Merkmale mit Schutzfunktionen in sich vereint, sind diese zur Erleichterung des Verständnisses des Aufbaus der einzelnen dieser Schutzfunktionen anhand separat dargestellter Batterieanordnungen beschrieben.

Bei einer Kombination mehrerer Schutzfunktionen können diese positiv miteinander wechselwirken und einen gesamten Nutzen eines Schutzes gegen thermisches Durchgehen gegenseitig verstärken. So kann beispielsweise eine Batterieanordnung, die ein temperaturaktivierbares Material sowie ein temperaturgesteuertes Ventil aufweist, bis zu einem gewissen Grade, insbesondere, solange die Reaktionsmindesttemperatur TR noch nicht erreicht wird, eine weitgehend reversible Schutzfunktion in Form des Öffnens des temperaturgesteuerten Ventils nutzen. Genügt dies zur Eindämmung oder Verhinderung eines thermischen Durchgehens nicht und wird die Reaktionsmindesttemperatur TR überschritten, wird das temperaturaktivierbare Material aktiviert. Handelt es sich dabei um beispielsweise ein intumeszierendes Material, so kann sich dessen Volumen vergrößern und eine weitere Ausbreitung des unerwünschten Zustandes auf weitere Einzelzellen auch bei bereits hohen Temperaturen über einen besonders langen Zeitraum hinweg eindämmen oder gar gänzlich stoppen.

Dabei kann sich die Zeitdauer bis zum Erreichen der Reaktionsmindesttemperatur TR, und damit auch in der Regel einer irreversiblen Aktivierung des temperaturaktivierbaren Materials, durch Öffnen des temperaturgesteuerten Ventils und einer damit verbundenen Druckreduzierung im Aufnahmeraum und einer Wärmeabfuhr durch das Ventil hindurch verlängern. Die erreichbare Gesamtschutzdauer kann somit länger als die Summe der einzelnen Schutzdauern des temperaturgesteuerten Ventils und des temperaturaktivierbaren Materials jeweils für sich genommen sein.

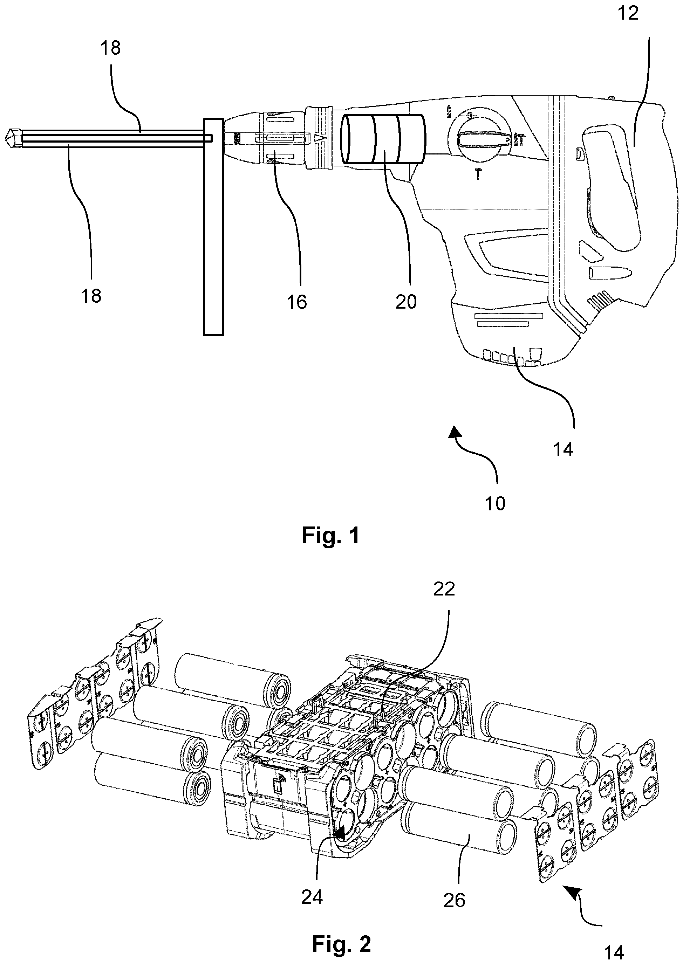

**Fig. 1** zeigt eine mobile Werkzeugmaschine **10**. Die mobile Werkzeugmaschine 10 ist als Bohrhammermaschine ausgebildet. Sie ist als tragbares Gerät ausgebildet und weist dazu einen Griffabschnitt **12** auf.

Die mobile Werkzeugmaschine 10 ist kabellos betreibbar. Dazu weist sie eine Batterieanordnung **14** auf, die wiederaufladbar ist.

Die mobile Werkzeugmaschine 10 weist ferner eine Werkzeugaufnahme **16** auf. In diese ist ein Werkzeug **18** aufgenommen.

Die Handwerkzeugmaschine 12 weist weiter ein, in Fig. 1 lediglich schematisch dargestelltes, elektropneumatisches Schlagwerk **20** auf. Das elektropneumatisches Schlagwerk 20 treibt die Werkzeugaufnahme 16 und damit das Werkzeug 18 wahlweise drehend, schlagend oder drehschlagend an. Das elektropneumatisches Schlagwerk 20 kann von der Batterieanordnung 14 mit Energie versorgt werden.

**Fig. 2** zeigt eine wiederaufladbare Batterieanordnung 14 für eine mobile Werkzeugmaschine, beispielsweise die mobile Werkzeugmaschine 10 gemäß Fig. 1 in Explosionsdarstellung.

Die Batterieanordnung 14 weist eine Haltestruktur **22** auf, in der mehrere Aufnahmeräume **24** eingearbeitet sind. In den Aufnahmeräumen 24 befinden sich Einzelzellen **26**. Die Einzelzellen 26 sind wiederaufladbare, insbesondere Lithium-basierte, Sekundärelemente. Die Einzelzellen 26 sind zylinderförmig. Zur Vereinfachung der Darstellung sind in Fig. 2 jeweils lediglich einer der Aufnahmeräume 24 und eine der Einzelzellen 26 mit einem Bezugszeichen markiert.

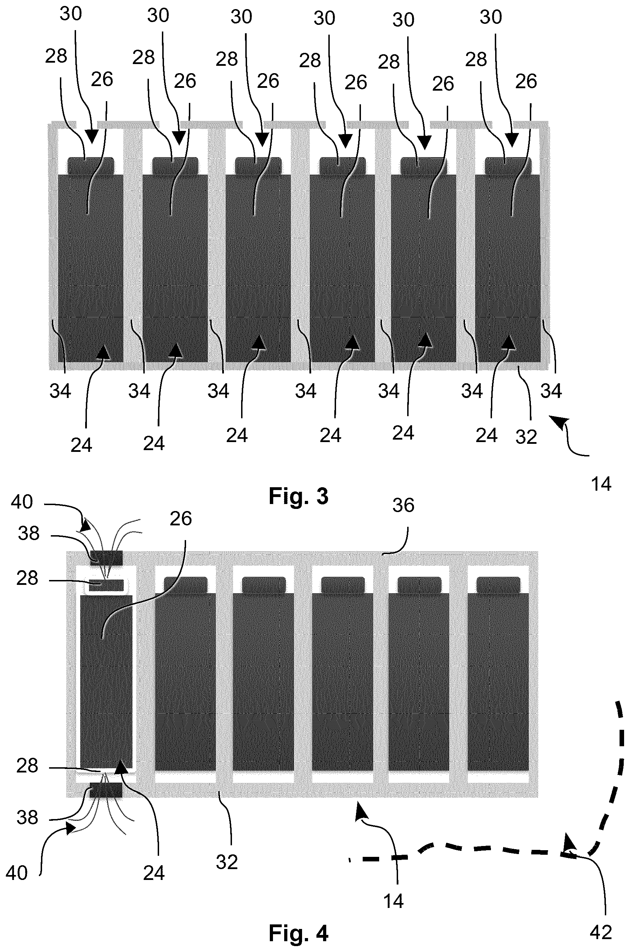

**Fig. 3** zeigt in einer schematischen Schnittansicht eine wiederaufladbare Batterieanordnung 14 mit mehreren Einzelzellen 26, die wiederum jeweils in Aufnahmeräumen 24 aufgenommen sind. Die Aufnahmeräume 24 sind wesentlich länger als die Einzelzellen 26, sodass sich oberhalb der Einzelzellen 26, insbesondere oberhalb von Polanschlüssen **28,** jeweils Entlastungsräume **30** ausgebildet sind.

Die Einzelzellen 26 kontaktieren eine untere Wand **32** des Aufnahmeraums 24.

Aus den Einzelzellen 26 austretende Gase, insbesondere aus Bereichen um die Polanschlüsse 28 herum austretende Gase, sammeln sich somit in den Entlastungsräumen 30. Das Volumen jedes der Entlastungsräume 30 kann wenigstens 5%, vorzugsweise wenigstens 10%, beispielsweise 25%, des Volumens der Einzelzellen 26 betragen.

Seitenwände **34** der Aufnahmeräume 24 bilden somit Führungskanäle für die austretenden Gase und können diese in die Entlastungsräume 30 leiten.

**Fig. 4** zeigt eine schematische Darstellung einer weiteren Batterieanordnung 14. Beispielhaft ist ein Aufnahmeraum 24 mit einem Bezugszeichen versehen, der zwei temperaturgesteuerte Ventile **38** aufweist. Die temperaturgesteuerten Ventile 38 sitzen in Wänden des Aufnahmeraums 24 gegenüber von zwei Polanschlüssen 28 einer Einzelzelle 26.

Die temperaturgesteuerten Ventile 38 weisen eine Grenztemperatur TG von 70°C auf.

Die mit einem Bezugszeichen markierte Einzelzelle 26 ist stark erhitzt und setzt heiße Gase 40 frei. Die heißen Gase 40 weisen eine Temperatur höher als die Grenztemperatur TG der temperaturgesteuerten Ventile 38 auf, beispielsweise 75°C.

Somit erwärmen sich die temperaturgesteuerten Ventile 38 durch die heißen Gase 40 über ihre Grenztemperatur TG hinaus, wodurch sie öffnen. Die heißen Gase 40 können durch die temperaturgesteuerten Ventile 38 aus dem Aufnahmeraum 24 in eine Umgebung **42** der Batterieanordnung 14 treten.

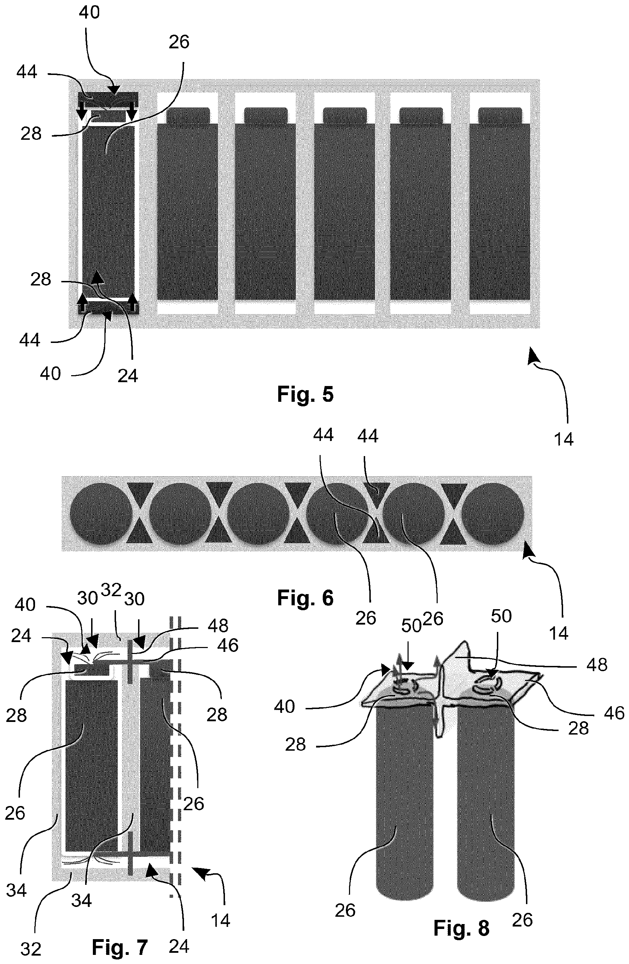

**Fig. 5** zeigt eine schematische Darstellung einer weiteren Batterieanordnung 14 mit einem aktivierbaren Material **44**. Das aktivierbare Material ist aus einer Klasse endothermischer und / oder intumeszierender Materialien. Es kann eine Reaktionsmindesttemperatur TR von beispielsweise von mindestens 50°C, vorzugsweise weniger als 200°C, insbesondere von 70 °C, aufweisen.

Die mit einem Bezugszeichen markierte Einzelzelle 26 ist stark erhitzt und setzt wiederum heiße Gase 40 frei. Die heißen Gase 40 weisen eine Temperatur höher als die Reaktionsmindesttemperatur TR des temperaturaktivierbaren Materials 44 auf, beispielsweise höher als 70°C, auf.

Somit erwärmt sich das temperaturaktivierbare Material 44, sodass es aufzuquellen beginnt und sich in Richtung der Pfeile gemäß Fig.5 innerhalb des Aufnahmeraums 24 auszubreiten.

**Fig. 6** zeigt eine schematische Darstellung einer weiteren Batterieanordnung 14 mit einem aktivierbaren Material 44. Bei diesem Ausführungsbeispiel ist das aktivierbare Material 44 ein endothermes Material, das ab seiner Reaktionsmindesttemperatur TR beginnt, Latentwärme durch einen Phasenübergang zu speichern.

Das aktivierbare Material 44 befindet sich in Zwischenräumen jeweils zweier benachbarter Einzelzellen 26.

Aus Gründen der Übersichtlichkeit sind in Fig. 6 lediglich zwei benachbarte Einzelzellen 26 sowie das dort befindliche aktivierbare Material 44 mit Bezugszeichen versehen.

**Fig. 7** zeigt eine schematische Darstellung einer Batterieanordnung 14 mit einer Anschlussplatte **46**. **Fig. 8** zeigt eine Detailansicht mit zwei über die Anschlussplatte 46 verbundenen Einzelzellen 26.

Die Anschlussplatte 46 verbindet jeweils zwei Polanschlüsse 28 zweier benachbarter Einzelzellen 26, die in benachbarten Aufnahmeräumen 24 aufgenommen sind, miteinander. Sie stellt insbesondere einen elektrischen Kontakt zwischen beiden her.

Wie insbesondere anhand Fig. 8 erkennbar, weist die Anschlussplatte 46 eine Sperrfläche **48** auf. Die Sperrfläche **48** ragt senkrecht zur Verbindungsrichtung zwischen den beiden Polanschlüssen von der übrigen Anschlussplatte 46 ab.

Wie insbesondere anhand Fig. 7 erkennbar, kann die Sperrfläche 48 Zwischenräume zwischen Seitenwänden 34 und / oder Wänden 32 abdichten. Somit können aus einer der Einzelzellen 26 austretende, heiße Gase 40 zwar in einen jeder Einzelzelle 26 zugeordneten Entlastungsraum 30, nicht jedoch zur benachbarten Einzelzelle 26 oder dem ihr zugeordneten Entlastungsraum 30, gelangen.

Somit kann die Anschlussplatte 46 sowohl einen elektrischen Kontakt zwischen den beiden Polanschlüssen 28 bzw. den beiden benachbarten Einzelzellen 26 herstellen und dennoch strömungsmechanisch die zugehörigen Aufnahmeräume 24 und / oder die Entlastungsräume 30 und insbesondere auch die beiden Einzelzellen 26 voneinander trennen.

Anhand von Fig. 8 ist ferner erkennbar, dass die Anschlussplatte 46 Öffnungen **50,** insbesondere im Bereich der Polanschlüsse 28, aufweist.

Durch die Öffnungen 50 können die heißen Gase 40 entweichen, sodass Aufstauungen im Bereich der Polanschlüsse 28, gegebenenfalls verbunden mit einer hohen Explosionsgefahr, vermieden werden können.

Die Anschlussplatte 46 kann zum Aufstecken auf die Polanschlüsse 28 und / oder auf eine der Wände 32, 34 eingerichtet sein.

In den vorangehend beschriebenen Ausführungsbeispielen weisen die Einzelzellen eine zylindrische Form auf. Denkbar ist alternativ, dass die Einzelzellen 26 als Pouchzellen ausgebildet sind. Sie können insbesondere quaderförmig ausgebildet sein.

**Bezugszeichenliste**

| | |
|---|---|
| 10 | Werkzeugmaschine |
| 12 | Griffabschnitt |
| 14 | Batterieanordnung |
| 16 | Werkzeugaufnahme |
| 18 | Werkzeug |
| 20 | Schlagwerk |
| 22 | Haltestruktur |
| 24 | Aufnahmeraum |
| 26 | Einzelzellen |
| 28 | Polanschluss |
| 30 | Entlastungsraum |
| 32 | Wand |
| 34 | Seitenwand |
| 38 | Ventil |
| 42 | Umgebung |
| 44 | Material |
| 46 | Anschlussplatte |
| 48 | Sperrfläche |
| 50 | Öffnung |

**Patentansprüche**

1. Wiederaufladbare Batterieanordnung (14) für eine mobile Werkzeugmaschine (10) mit wenigstens einer Einzelzelle (26), mit einer Haltestruktur (22) mit wenigstens einem Aufnahmeraum (24), wobei die Einzelzelle (26) in den Aufnahmeraum (24) aufgenommen ist,
**dadurch gekennzeichnet,**
**dass** der Aufnahmeraum (24) mit einem Entlastungsraum (30) der Batterieanordnung derart verbunden ist, dass ein aus der Einzelzelle (26) austretendes und / oder von der Einzelzelle (26) gebildetes Gas vom Aufnahmeraum (24) in den Entlastungsraum (26) fließen kann.

2. Batterieanordnung nach dem vorhergehenden Anspruch, **dadurch gekennzeichnet, dass** am Aufnahmeraum (24) ein temperaturgesteuertes Ventil (38) ausgebildet ist, das ab einer Grenztemperatur TG öffnet.

3. Batterieanordnung nach Anspruch 2, **dadurch gekennzeichnet, dass** das temperaturgesteuerte Ventil als Schwachstelle in einer Wand (32, 34) des Aufnahmeraums (24), insbesondere an einer einer Stirnfläche der Einzelzelle (26) gegenüberliegenden Wand (32, 34), ausgebildet ist und / oder eine solche umfasst.

4. Batterieanordnung nach einem der vorhergehenden Ansprüche, **dadurch gekennzeichnet, dass** die Batterieanordnung (14), insbesondere angrenzend an den Aufnahmeraum (24), ein aktivierbares Material (44) aufweist.

5. Batterieanordnung nach einem der vorhergehenden Ansprüche, **dadurch gekennzeichnet, dass** das aktivierbare Material (44) ein intumeszierendes und / oder endothermes Material ist.

6. Batterieanordnung nach dem vorhergehenden Anspruch, **dadurch gekennzeichnet, dass** die Batterieanordnung (14) wenigstens zwei benachbarte Einzelzellen (26) aufweist, wobei sich zwischen den beiden Einzelzellen (26) das aktivierbare Material (44) befindet.

7. Batterieanordnung nach einem der vorhergehenden Ansprüche, **dadurch gekennzeichnet, dass** die Batterieanordnung (14) wenigstens zwei benachbarte Einzelzellen (26) aufweist, wobei jede Einzelzelle (26) wenigstens einen Polanschluss (28) aufweist, wobei wenigstens zwei Polanschlüsse (28) der beiden benachbarten Einzelzellen (26) miteinander durch eine Anschlussplatte (46) verbunden sind, wobei die Anschlussplatte (46) an wenigstens einer der Stirnseiten der Einzelzellen (26) eine Öffnung (50) aufweist.

8. Batterieanordnung nach dem vorhergehenden Anspruch, **dadurch gekennzeichnet, dass** die Anschlussplatte (46) senkrecht oder zumindest im Wesentlichen senkrecht zur Verbindungsrichtung der beiden Polanschlüsse (28) eine Sperrfläche (48) aufweist.

9. Batterieanordnung nach einem der vorhergehenden Ansprüche, **dadurch gekennzeichnet, dass** die Einzelzelle (26) als Pouchzelle ausgebildet ist.

**Fig. 1**

**Fig. 2**

**Fig. 3**

**Fig. 4**

**Fig. 5**

**Fig. 6**

**Fig. 7**

**Fig. 8**

**EUROPÄISCHER RECHERCHENBERICHT**

Europäisches Patentamt
European Patent Office
Office européen des brevets

**Nummer der Anmeldung**

**EP 22 21 2135**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2015/221914 A1 (PAGE JOHN B [CA] ET AL) 6. August 2015 (2015-08-06) | 1-6,9 | INV. H01M50/358 |
| Y | * Absätze [0057] – [0074] * * Absatz [0106] * * Abbildungen 5-7 * ----- | 7,8 | H01M50/503 H01M10/65 H01M50/105 H01M50/342 |
| Y | CN 114 142 132 A (WANG BO) 4. März 2022 (2022-03-04) | 7,8 | H01M50/593 H01M50/375 |
| A | * Zusammenfassung * * Beispiele 1,2,3 * * Abbildungen 1-8 * ----- | 1-6,9 | H01M50/392 H01M50/207 H01M50/218 |
| A | DE 10 2015 007408 A1 (DAIMLER AG [DE]) 15. Dezember 2016 (2016-12-15) * Absätze [0048] – [0061] * * Abbildungen 1-15 * ----- | 1-9 | |
| A | US 2022/271359 A1 (FRANKE TORSTEN [DE]) 25. August 2022 (2022-08-25) * Absätze [0025] – [0030] * * Abbildungen 1-2 * ----- | 1-9 | |

**RECHERCHIERTE SACHGEBIETE (IPC)**

H01M

Der vorliegende Recherchenbericht wurde für alle Patentansprüche erstellt

| Recherchenort | Abschlußdatum der Recherche | Prüfer |
|---|---|---|
| München | 22. Mai 2023 | Kelly, Michael |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 21 2135

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-05-2023

| Im Recherchenbericht angeführtes Patentdokument | Datum der Veröffentlichung | Mitglied(er) der Patentfamilie | Datum der Veröffentlichung |
|---|---|---|---|
| US 2015221914 A1 | 06-08-2015 | CA 2938316 A1 | 06-08-2015 |
| | | JP 2019061958 A | 18-04-2019 |
| | | KR 20190035580 A | 03-04-2019 |
| | | US 2015221914 A1 | 06-08-2015 |
| | | US 2018026245 A1 | 25-01-2018 |
| | | US 2020152942 A1 | 14-05-2020 |
| | | WO 2015113133 A1 | 06-08-2015 |
| CN 114142132 A | 04-03-2022 | KEINE | |
| DE 102015007408 A1 | 15-12-2016 | KEINE | |
| US 2022271359 A1 | 25-08-2022 | CN 114927825 A | 19-08-2022 |
| | | DE 102021103378 B3 | 20-01-2022 |
| | | US 2022271359 A1 | 25-08-2022 |
| | | WO 2022171228 A1 | 18-08-2022 |

EPO FORM P0461

Für nähere Einzelheiten zu diesem Anhang : siehe Amtsblatt des Europäischen Patentamts, Nr.12/82